# EUROPÄISCHE PATENTANMELDUNG

(11) **EP 1 884 679 A2**
(43) Veröffentlichungstag der Anmeldung: **06.02.2008**
(21) Anmeldenummer: 07111737.8
(22) Anmeldetag: 04.07.2007
(51) Int. Cl.: F16D 55/00, F16D 65/21

(54) **Scheibenbremse**

(30) Priorität: 02.08.2006 DE 102006035984
(71) Anmelder: ROBERT BOSCH GMBH, 70442 Stuttgart (DE)
(72) Erfinder: Cao, Chi-Thuan, 70825, Korntal-Muenchingen (DE); Hofmann, Dirk, 70439, Stuttgart (DE); Vollert, Herbert, 71665, Vaihingen/Enz (DE); Nagel, Willi, 71686, Remseck/Hochdorf (DE); Foitzik, Bertram, 74360, Ilsfeld (DE); Goetzelmann, Bernd, 71063, Sindelfingen (DE)

(57) **Zusammenfassung**

Die Erfindung betrifft eine Scheibenbremse (1), insbesondere eine elektromechanische selbstverstärkende Scheibenbremse (1). Die Erfindung schlägt Schmutzabdeckungen (9, 10) am Innen- und/oder Außenumfang einer Bremsscheibe (3) vor, die einen Reibbremsbelag (5) und einen Bremssattel (2) der Scheibenbremse (1) auf einer Seite der Bremsscheibe (3) und eventuell auch einen Spalt zwischen dem Reibbremsbelag (5) und der Bremsscheibe (3) abdeckt. Das Eindringen von Schmutz wird dadurch vermieden.

## Beschreibung

### Stand der Technik

Die Erfindung betrifft eine Scheibenbremse, die insbesondere für Kraftfahrzeuge vorgesehen ist, mit den Merkmalen des Oberbegriffs des Anspruchs 1.

Derartige Scheibenbremsen sind an sich bekannt. Sie weisen einen Bremssattel auf, der eine Bremsscheibe am Umfang übergreift und der sich beiderseits der Bremsscheibe befindet. Bei der Fahrt kann Schmutz in einen Spalt zwischen der Bremsscheibe und dem Bremssattel eindringen, der außer der Verschmutzung als solcher zu Schwergängigkeit, erhöhtem Verschleiß oder auch einem Klemmen beweglicher Teile der Scheibenbremse führen kann. Unter Schmutz sind auch Steine zu verstehen, die so klein sind, dass sie in den Spalt zwischen der Bremsscheibe und dem Bremssattel oder in den Bremssattel eindringen können.

### Offenbarung der Erfindung

Die erfindungsgemäße Scheibenbremse mit den Merkmalen des Anspruchs 1 weist eine Schmutzabdeckung auf, die sich im Bereich des Bremssattels über einen Umfangsabschnitt der Bremsscheibe erstreckt und die den Spalt seitlich der Bremsscheibe zwischen dem Bremssattel und der Bremsscheibe auf einer Seite der Bremsscheibe abdeckt. Die erfindungsgemäße Schmutzabdeckung kann sich auch über die Enden des Bremssattel in Umfangsrichtung der Bremsscheibe, also in etwa radial erstrecken. Die Schmutzabdeckung kann ein plattenförmiges Bauteil ähnlich einem Schutzblech der Räder eines Zweirads sein, sie ist vorzugsweise, jedoch nicht zwingend, entsprechend dem Radius der Bremsscheibe gewölbt. Vorzugsweise deckt die Schmutzabdeckung den Spalt zwischen der Bremsscheibe und dem Bremssattel in axialer Richtung vollständig ab und überdeckt die Bremsscheibe axial ein Stück weit. Ansonsten verkleinert die Schmutzabdeckung den Spalt zwischen dem Bremssattel und der Bremsscheibe in axialer Richtung. Die Menge des eindringenden Schmutzes wird dadurch zumindest verringert und es gelangen nur Schmutzpartikel in den Spalt zwischen der Bremsscheibe und dem Bremssattel, die so klein sind, dass sie durch einen Spalt zwischen der Schmutzabdeckung und der Bremsscheibe passen.

Die Erfindung hat den Vorteil, dass sie bewegliche Teile der Scheibenbremse vor Schmutz und Steinschlag schützt.

Die Unteransprüche haben vorteilhafte Ausgestaltungen und Weiterbildungen der im Anspruch 1 angegebenen Erfindung zum Gegenstand.

Gemäß Anspruch 3 überdeckt die Schmutzabdeckung die Bremsscheibe in axialer Richtung um mindestens eine Dicke eines Reibbremsbelags der Scheibenbremse. Dadurch ist der Spalt zwischen der Bremsscheibe und dem Bremssattel auch bei abgenutztem Reibbremsbelag noch von der Schmutzabdeckung abgedeckt.

Die Schmutzabdeckung kann am Bremssattel fest angeordnet, beispielsweise mit ihm verschraubt, vernietet oder einstückig sein. Anspruch 5 sieht vor, dass die Schmutzabdeckung ortsfest in Bezug auf die Bremsscheibe angeordnet, beispielsweise also an einem Bremsenhalter oder einem Achsschenkel angebracht ist. Diese Ausgestaltung der Erfindung ist insbesondere für einen Schwimmsattel vorgesehen, der quer zur Bremsscheibe verschieblich geführt ist und sich bei einer Bremsbetätigung quer zur Bremsscheibe verschiebt. Die in Bezug auf die Bremsscheibe ortsfeste Schmutzabdeckung bewegt sich nicht mit dem Bremssattel mit.

Gemäß Anspruch 7 ist die erfindungsgemäße Schmutzabdeckung für eine Scheibenbremse vorgesehen, deren Bremssattel als Rahmensattel ausgebildet ist. Rahmensattel sind anders als Faustsättel am Außenumfang der Bremsscheibe weitgehend offen, so dass hier Schmutz eindringen kann, wogegen die erfindungsgemäße Schmutzabdeckung vorgesehen ist. An einem Faustsattel kann die erfindungsgemäße Schmutzabdeckung wie bei anderen Sattelbauformen auch in etwa radial zu Bremsscheibe verlaufend Enden des Bremssattels abdecken.

Gemäß Anspruch 8 ist die Schmutzabdeckung auf der Seite der Bremsscheibe vorgesehen, auf der der Bremssattel eine Betätigungseinrichtung aufweist, mit der zur Bremsbetätigung ein Reibbremsbelag gegen die Bremsscheibe drückbar ist. Die Betätigungseinrichtung kann beispielsweise hydraulisch oder pneumatisch sein und einen Bremskolben aufweisen, sie kann auch mechanisch sein. Insbesondere ist die Erfindung für eine Scheibenbremse mit einer elektromechanischen Betätigungseinrichtung vorgesehen, um deren mechanische Teile vor Verschmutzung zu schützen. Elektromechanische Betätigungseinrichtungen von Scheibenbremsen weisen üblicherweise einen Elektromotor, vielfach ein Untersetzungsgetriebe, und ein Rotations-/Translations-Umsetzungsgetriebe, beispielsweise einen Gewindetrieb, zum Drücken des Reibbremsbelags gegen die Bremsscheibe auf.

### Kurze Beschreibung der Zeichnungen

Die Erfindung wird nachfolgend anhand eines in der Zeichnung dargestellten Ausführungsbeispiels näher erläutert. Es zeigen:
- Figur 1: eine erste Ausführungsform einer erfindungsgemäßen Scheibenbremse in einer Achsschnittdarstellung;
- Figur 2: die Scheibenbremse aus Figur 1 in einer Ansicht radial von außen auf die Bremsscheibe; und
- Figur 3: eine Figur 1 entsprechende Achsschnittdarstellung einer abgewandelten Ausführungsform der Scheibenbremse aus Figuren 1 und 2 gemäß der Erfindung.

Die Zeichnungen sind als vereinfachte und schematisierte Darstellungen zur Erläuterung der Erfindung zu verstehen.

### Ausführungsformen der Erfindung

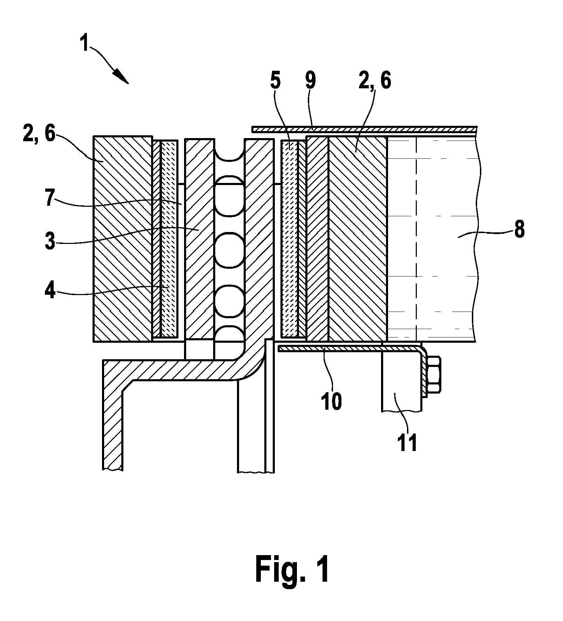

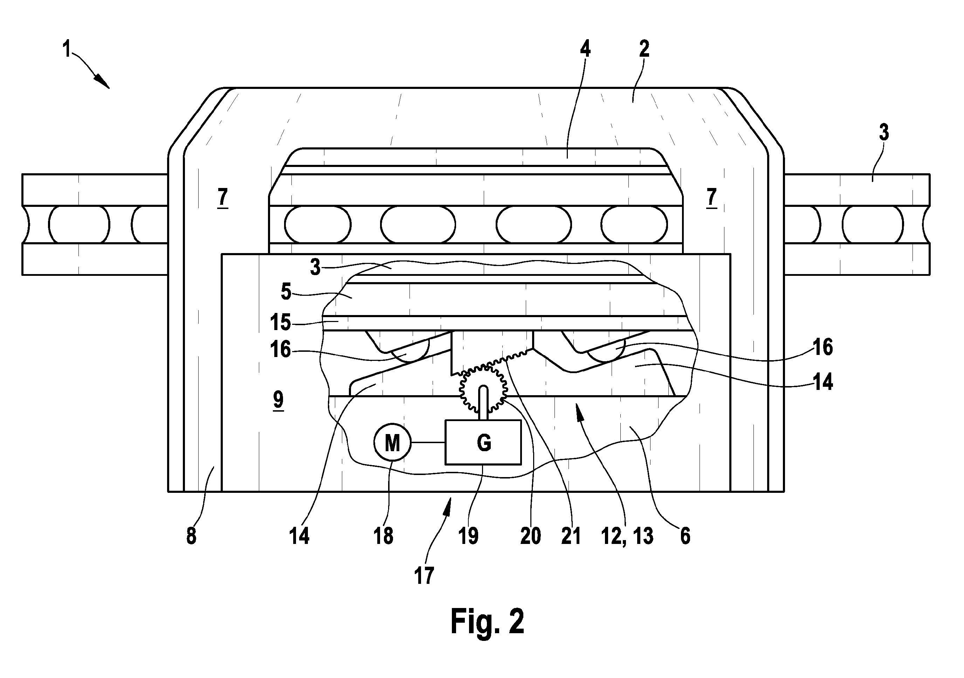

Die in Figuren 1 und 2 dargestellte erfindungsgemäße Scheibenbremse 1 weist einen Bremssattel 2 auf, in dem beiderseits einer Bremsscheibe 3 Reibbremsbeläge 4, 5 angeordnet sind. Einer der beiden Reibbremsbeläge 4, 5 nämlich der in Figur 1 links und in Figur 2 oben dargestellte Reibbremsbelag 4 liegt fest (und zum Wechseln lösbar) im Bremssattel 2 ein. Der andere, in Figur 1 rechts dargestellte Reibbremsbelag 5 ist beweglich im Bremssattel 2 aufgenommen, er wird zum Bremsen mit einer noch zu erläuternden elektromechanischen Betätigungseinrichtung gegen die Bremsscheibe 3 gedrückt. Zur Unterscheidung werden die Reibbremsbeläge 4, 5 nachfolgend als fester Reibbremsbelag 4 und als beweglicher Reibbremsbelag 5 bezeichnet werden.

Der Bremssattel 2 ist als sog. Schwimmsattel mit in der Zeichnung nicht sichtbaren Führungen quer zur Bremsscheibe 3 beweglich geführt. Dies ist an sich bekannt und braucht deswegen nicht näher erläutert werden. Zum Bremsen wird wie bereits gesagt der bewegliche Reibbremsbelag 5 gegen die eine Seite der Bremsscheibe 3 gedrückt. Dadurch bewegt sich der als Schwimmsattel ausgeführte Bremssattel 2 quer zur Bremsscheibe 3 und drückt den festen Reibbremsbelag 4 gegen die andere Seite der Bremsscheibe 3, die dadurch gebremst wird.

Der Bremssattel 2 ist als sog. Rahmensattel ausgebildet, er weist zwei zur Bremsscheibe 3 parallele Rahmenplatten 6 auf, an deren der Bremsscheibe 3 zugewandten Innenseiten die Reibbremsbeläge 4, 5 angeordnet sind. Die Rahmenplatten 6 sind an ihren beiden Enden außerhalb eines Umfangs der Bremsscheibe 3 durch Zuganker 7 miteinander verbunden. Die Rahmenplatten 6 und die Zuganker 7 sind miteinander einstückige Bestandteile des als Rahmensattel ausgebildeten Bremssattels 2. Auf der Seite der Bremsscheibe 3, auf der der bewegliche Reibbremsbelag 5 angeordnet ist, weist die Rahmenplatte 6 des Bremssattels 2 ein Motor- und Getriebegehäuse 8 auf, in dem die elektromechanische Betätigungseinrichtung untergebracht ist.

Am Außenumfang der Bremsscheibe 3 weist die Scheibenbremse 1 eine Schmutzabdeckung 9 auf, die am Bremssattel 2 angebracht ist. Die Schmutzabdeckung 9 ist beispielsweise ein Blech oder ein Kunststoffteil. Die Schmutzabdeckung 9 weist einen radialen Abstand vom Außenumfang der Bremsscheibe 3 von ca. 2 mm auf, sie ist in Umfangsrichtung der Bremsscheibe 3 entsprechend der Krümmung des Außenumfangs der Bremsscheibe 3 gewölbt. In axialer Richtung zur Bremsscheibe 3 überdeckt die Schmutzabdeckung 9 den beweglichen Reibbremsbelag 5 in einer Richtung bis zum Bremssattel 2 und in der anderen Richtung bis zur Bremsscheibe 3, die sie um einige Millimeter überdeckt. Die Schmutzabdeckung 9 ist fest am Bremssattel 2 angeordnet. Die axiale Überdeckung der Bremsscheibe 3 ist in etwa so groß wie eine Dicke des festen Reibbremsbelags 4 zuzüglich eines Lüftspiels zwischen dem festen Reibbremsbelag 4 und der Bremsscheibe 3. Das Lüftspiel ist ein Spalt zwischen dem Reibbremsbelag 4 und der Bremsscheibe 3 bei nicht betätigter Scheibenbremse 1. Dadurch überdeckt die Schmutzabdeckung 9 die Bremsscheibe 3 auch bei betätigter Scheibenbremse 1 und abgenutztem Reibbremsbelag 4. Die Schmutzabdeckung 9 überdeckt den Spalt zwischen der Bremsscheibe 3 und dem beweglichen Reibbremsbelag 5 und einen Bereich zwischen dem beweglichen Reibbremsbelag 5 und dem Bremssattel 2 am Außenumfang der Bremsscheibe 3. Dadurch wird vermieden, dass Schmutz oder kleine Steine von außen zwischen die Bremsscheibe 3 und den beweglichen Reibbremsbelag 5 und auf einer der Bremsscheibe 3 abgewandten Rückseite des beweglichen Reibbremsbelags 5 in das Motor- und Getriebegehäuse 8 des Bremssattels 2 gelangen, in der die elektromechanische Betätigungseinrichtung der Scheibenbremse 1 angeordnet ist.

Am Innenumfang der Bremsscheibe 3 weist die Scheibenbremse 1 ebenfalls eine Schmutzabdeckung 10 auf. Mit Innenumfang ist gemeint, dass sich die Schmutzabdeckung 10 radial innerhalb einer lochscheibenförmigen Reibfläche der Bremsscheibe 3 befindet. Die Reibfläche ist die Oberfläche der Bremsscheibe 3, die beim Bremsen mit den Reibbremsbelägen 4, 5 in Berührung kommt. Diese nachfolgend als innere bezeichnete Schmutzabdeckung 10 ist eben, weil der Bremssattel 2 und der Reibbremsbelag 5 auf der radial inneren Seite der Bremsscheibe 3 eben bzw. gerade sind. In axialer Richtung reicht die innere Schmutzabdeckung 10 bis auf einen Spalt von ca. 2 mm an die Bremsscheibe 3 heran. Eine Überdeckung des Spalts zwischen der Bremsscheibe 3 und dem beweglichen Reibbremsbelag 5 ist an der Innenseite nicht möglich wegen der Kreisform der Bremsscheibe 3. Die innere Schmutzabdeckung 10 vermeidet zumindest das Eindringen von Schmutzpartikeln und kleinen Steinen mit einer Größe von mindestens 2 mm in den Spalt zwischen der Bremsscheibe 3 und dem beweglichen Reibbremsbelag 5. Außerdem verhindert die innere Schmutzabdeckung 10 das Eindringen von Schmutz an der der Bremsscheibe 3 abgewandten Rückseite des beweglichen Reibbremsbelags 5 in das Motor- und Getriebegehäuse 8 des Bremssattels 2. Die innere Schmutzabdeckung 10 ist mit einem Bremsenhalter 11 verschraubt, an dem der Bremssattel 2 quer zur Bremsscheibe 3 beweglich geführt ist. Die innere Schmutzabdeckung 10 ist also ortsfest in Bezug auf die Bremsscheibe 3, sie bewegt sich bei Betätigung der Scheibenbremse 1 nicht quer zur Bremsscheibe 3 mit dem Bremssattel 2 mit.

In Figur 2 ist durch einen Ausbruch der äußeren Schmutzabdeckung 9 und des Motor- und Getriebegehäuses 8 eine mechanische Selbstverstärkungseinrichtung 12 der Scheibenbremse 1 zu sehen. Die elektromechanische Selbstverstärkungseinrichtung 12 wandelt eine bei betätigter Scheibenbremse 1 von der drehenden Bremsscheibe 3 auf den gegen sie gedrückten beweglichen Reibbremsbelag 5 ausgeübte Reibungskraft, die in Umfangsrichtung der Bremsscheibe 3 wirkt, in eine Andruckkraft, die den beweglichen Reibbremsbelag 5 zusätzlich zu einer von der elektromechanischen Betätigungseinrichtung aufgebrachten Andruckkraft gegen die Bremsscheibe 3 drückt. Die Andruck- und die Bremskraft der Scheibenbremse 1 werden dadurch erhöht.

Bei der dargestellten Ausführungsform der Erfindung weist die Selbstverstärkungseinrichtung 12 einen Rampenmechanismus 13 mit in Umfangsrichtung der Bremsscheibe 3 verlaufenden Rampen 14 auf. Die Rampen 14 verlaufen in einem Winkel zur Bremsscheibe 3, d. h. mit einer Steigung zur Bremsscheibe 3. Auf den Rampen 14 wälzen Wälzkörper 16, die drehbar auf einer der Bremsscheibe 3 abgewandten Rückseite einer Belagträgerplatte 15 gelagert sind. In der dargestellten Ausführungsform der Erfindung sind die Wälzkörper 16 Rollen, es kommen allerdings auch andere Wälzkörper, beispielsweise Kugeln, in Betracht (nicht dargestellt). Auf einer der Bremsscheibe 3 zugewandten Vorderseite der Belagträgerplatte 15 ist der bewegliche Reibbremsbelag 5 lösbar angebracht. Gemeinsam mit der Belagträgerplatte 15 ist der bewegliche Reibbremsbelag 5 über die Wälzkörper 16 an den Rampen 14 in Umfangsrichtung der Bremsscheibe 3 und genauer ausgedrückt auf einer schraubenlinienförmigen Bahn um eine gedachte Drehachse der Bremsscheibe 3 beweglich geführt. Wird der bewegliche Reibbremsbelag 5 zur Betätigung der Scheibenbremse 1 gegen die Bremsscheibe 3 gedrückt, übt die drehende Bremsscheibe 3 eine Reibungskraft in Umfangsrichtung auf den gegen sie gedrückten beweglichen Reibbremsbelag 5 aus. Über die Abstützung an den Rampen 14, die in einem Winkel zur Bremsscheibe 3 verlaufen, bewirkt die Kraft auf den Reibbremsbelag 5 in Umfangsrichtung zur Bremsscheibe 3 eine Kraft senkrecht zu den Rampen 14. Diese Kraft senkrecht zu den Rampen 14 weist eine Komponente senkrecht zur Bremsscheibe 3 auf, die eine Andruckkraft bildet, die den beweglichen Reibbremsbelag 5 gegen die Bremsscheibe 3 drückt. Diese Andruckkraft wirkt zusätzlich zu einer von der elektromechanischen Betätigungseinrichtung aufgebrachten Andruckkraft und verstärkt die Bremskraft der Scheibenbremse 1. Weisen die Rampen 14 eine über ihren Verlauf konstante Steigung auf, spricht man auch von einem Keilmechanismus.

Die Betätigungseinrichtung 17 der Scheibenbremse 1 weist einen Elektromotor 18 auf, der über ein Untersetzungsgetriebe 19 ein Zahnrad 20 antreibt. Der Elektromotor 18 und das Getriebe 19 sind in Figur 2 symbolisch dargestellt. Das Zahnrad 20 kämmt mit einer Zahnstange 21, die fest mit der Belagträgerplatte 15 ist. Die Zahnstange 21 verläuft ebenso wie die Rampen 14 in Umfangsrichtung zur Bremsscheibe 3 und mit derselben Steigung wie die Rampen 14. Durch drehenden Antrieb des Zahnrads 20 wird die Belagträgerplatte 15 mit dem beweglichen Reibbremsbelag 5 in Verlaufsrichtung der Rampen 14 verschoben, d. h. auf der bereits erläuterten schraubenlinienförmigen Bahn um die Drehachse der Bremsscheibe 3 auf die Bremsscheibe 3 zu, so dass der bewegliche Reibbremsbelag 5 gegen die Bremsscheibe 3 gedrückt wird und diese bremst.

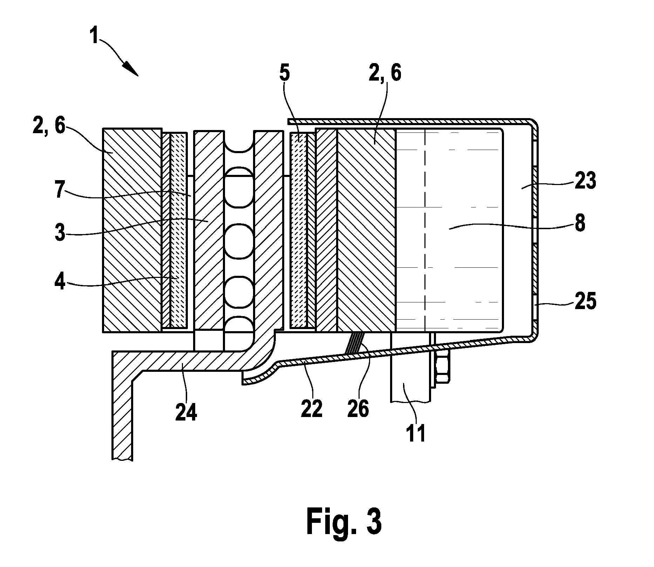

Bei der in Figur 3 dargestellten Ausführungsform der Erfindung ist eine Schmutzabdeckung 22 als eine Art im Querschnitt C-förmige Profilschiene oder als zur Bremsscheibe 3 hin offenes Gehäuse ausgebildet. Die Schmutzabdeckung 22 umgreift das Motor- und Getriebegehäuse 8 bzw. den Bremssattel 2 auf der der Bremsscheibe 3 abgewandten Seite. Die Schmutzabdeckung 22 ist mit dem Bremsenhalter 11 verschraubt, d. h. die Schmutzabdeckung 22 ist ortsfest in Bezug auf die Bremsscheibe 3. Auf einer der Bremsscheibe 3 abgewandten Rückseite des Motor- und Getriebegehäuses 8 besteht ein ausreichend großer Freiraum 23 zwischen dem Motor- und Getriebegehäuse 8 und der Schmutzabdeckung 22, damit sich der Bremssattel 2 bei einer Bremsbetätigung quer zur Bremsscheibe 3 verschieben kann. Dabei ist ein Verschleiß des festen Reibbremsbelags 4 zu berücksichtigen.

Am Außenumfang der Bremsscheibe 3 überdeckt die Schmutzabdeckung 22 die Bremsscheibe 3 in axialer Richtung nicht, sondern es besteht ein Spalt in axialer Richtung von etwa 2 mm. Der Spalt ist vorzugsweise größer als der Abstand des beweglichen Reibbremsbelags 5 von der Bremsscheibe 3. Dadurch ist es möglich, dass eingedrungener Schmutz nach außen gelangt, insbesondere schleudert die drehende Bremsscheibe 3 solchen Schmutz nach außen. Am Innenumfang der Bremsscheibe 3, also radial innerhalb der lochscheibenförmigen Reibfläche der Bremsscheibe 3, ist die Schmutzabdeckung 22 gekröpft und in Umfangsrichtung entsprechend dem Innenumfang der Bremsscheibe 3 gewölbt. Die Schmutzabdeckung 22 greift am Innenumfang der Bremsscheibe 3 in eine hohlzylindrische, topfförmige Nabe 24 der Bremsscheibe 3. Dadurch wird an der Innenseite der Spalt zwischen der Bremsscheibe 3 und dem beweglichen Reibbremsbelag 5 von der Schmutzabdeckung 22 überdeckt. Die Schmutzabdeckung 22 weist Lüftungsöffnungen 25 im Bereich des Motor- und Getriebegehäuses 8 zur Wärmeabfuhr auf.

Der untere Teil der Schmutzabdeckung 22 verläuft zur Nabe 24 der Bremsscheibe 3 schräg nach unten, so dass Wasser ablaufen kann. Außerdem wird eingedrungener Schmutz durch Vibrationen und Erschütterungen bei der Fahrt durch Schwerkraftwirkung in Richtung zur Nabe 24 gefördert und entfernt. Dabei bezieht sich schräg nach unten auf die Einbaulage des Bremssattels 2 mit der Schmutzabdeckung 22. Grundsätzlich ist abhängig von der Einbaulage des Bremssattels 2 und der Schmutzabdeckung 22 immer der tiefste Teil der Schmutzabdeckung 22 schräg nach unten geneigt anzuordnen. Zusätzlich können Borsten 26 oder dgl. Schmutzabweiser vorgesehen sein, die ein Eindringen von Schmutz vermeiden. Sind die Borsten 26 wie in Figur 3 gezeigt schräggestellt, verhindern sie nicht nur ein Eindringen von Schmutz, sondern lassen eingedrungenen Schmutz sogar austreten. Diese Ausgestaltungen können auch bei den Schmutzabdeckungen 9, 10 der in Figuren 1 und 2 dargestellten Scheibenbremse 1 verwirklicht sein.

Im Übrigen ist die in Figur 3 dargestellte Scheibenbremse 1 gleich ausgebildet wie die in Figuren 1 und 2 dargestellte. Zur Vermeidung von Wiederholungen wird zur Erläuterung der Figur 3 auf die Erläuterungen der Figuren 1 und 2 verwiesen. Gleiche Bauteile sind mit gleichen Bezugszahlen versehen. Kombinationen der beiden Ausführungsformen sind möglich, beispielsweise kann die äußere Schmutzabdeckung 9 der in Figuren 1 und 2 dargestellten Scheibenbremse 1 wie die Schmutzabdeckung 22 der in Figur 3 dargestellten Scheibenbremse 1 am Außenumfang der Bremsscheibe 3 den Spalt zwischen der Bremsscheibe 3 und dem beweglichen Reibbremsbelag 5 nicht abdecken oder umgekehrt kann die Schmutzabdeckung 22 in Figur 3 diesen Spalt abdecken. Für den Innenumfang der Bremsscheibe 3 gilt das entsprechend.

## Patentansprüche

1. Scheibenbremse, mit einem Bremssattel (2) und mit einer Bremsscheibe (3), **dadurch gekennzeichnet, dass** die Scheibenbremse (1) eine Schmutzabdeckung (9; 10; 22) aufweist, die sich im Bereich des Bremssattels (2) über einen Umfangsabschnitt der Bremsscheibe (2) erstreckt und die einen Spalt zwischen dem Bremssattel (2) und der Bremsscheibe (3) auf einer Seite der Bremsscheibe (3) abdeckt.

2. Scheibenbremse nach Anspruch 1, **dadurch gekennzeichnet, dass** die Schmutzabdeckung (9) außerhalb eines Außenumfangs der Bremsscheibe (3) angeordnet ist und die Bremsscheibe (3) in axialer Richtung ein Stück weit überdeckt.

3. Scheibenbremse nach Anspruch 2, **dadurch gekennzeichnet, dass** die Schmutzabdeckung (9) die Bremsscheibe (3) um mindestens eine Dicke eines Reibbremsbelags (4) der Scheibenbremse (1) in axialer Richtung überdeckt.

4. Scheibenbremse nach Anspruch 1, **dadurch gekennzeichnet, dass** die Schmutzabdeckung (10; 22) radial innerhalb einer lochscheibenförmigen Reibfläche der Bremsscheibe (3) angeordnet ist.

5. Scheibenbremse nach Anspruch 1, **dadurch gekennzeichnet, dass** die Schmutzabdeckung (10; 22) ortsfest in Bezug auf die Bremsscheibe (3) angeordnet ist.

6. Scheibenbremse nach Anspruch 4, **dadurch gekennzeichnet, dass** die Schmutzabdeckung (22) in axialer Richtung in eine Nabe (24) der Bremsscheibe (3) ragt.

7. Scheibenbremse nach Anspruch 1, **dadurch gekennzeichnet, dass** die Scheibenbremse (1) einen Rahmensattel als Bremssattel (2) aufweist.

8. Scheibenbremse nach Anspruch 1, **dadurch gekennzeichnet, dass** die Schmutzabdeckung (9; 10; 22) auf der Seite der Bremsscheibe (3) angeordnet ist, auf der der Bremssattel (2) eine Betätigungseinrichtung (17) zum Drücken eines Reibbremsbelags (5) der Scheibenbremse (1) gegen die Bremsscheibe (3) aufweist.

9. Scheibenbremse nach Anspruch 1, **dadurch gekennzeichnet, dass** die Scheibenbremse (1) eine elektromechanische Betätigungseinrichtung (17) zum Drücken des Reibbremsbelags (5) gegen die Bremsscheibe (3) aufweist.

10. Scheibenbremse nach Anspruch 1, **dadurch gekennzeichnet, dass** die Scheibenbremse (1) eine mechanische Selbstverstärkungseinrichtung (12) aufweist, die eine bei betätigter Scheibenbremse (1) von der drehenden Bremsscheibe (3) auf den gegen sie gedrückten Reibbremsbelag (5) ausgeübte Reibungskraft in eine Andruckkraft wandelt, die den Reibbremsbelag (5) zusätzlich zu einer von der Betätigungseinrichtung (17) aufgebrachten Andruckkraft gegen die Bremsscheibe (3) drückt.
